Europäisches Patentamt

European Patent Office

Office européen des brevets

(11) Publication number: **0 211 118**
**A1**

## EUROPEAN PATENT APPLICATION

(21) Application number: 85305522.6

(22) Date of filing: 02.08.85

(51) Int. Cl.⁴: **A23L 2/26** , A23L 2/38

(43) Date of publication of application:
25.02.87 Bulletin 87/09

(84) Designated Contracting States:
AT BE CH DE FR GB IT LI LU NL SE

(71) Applicant: **NEW ZEALAND GOVERNMENT
PROPERTY CORPORATION
Parliament Buildings
Wellington(NZ)**

(72) Inventor: **Lodge, Norman** c/o Dep. of
Scientific & Ind. Res.
**120 Mt Albert Road
Auckland(NZ)**

(74) Representative: **Crisp, David Norman**
D. YOUNG & CO. 10 Staple Inn
London, WC1V 7RD(GB)

(54) Improvements in or relating to drinking preparations.

(57) A method of forming a homogeneous drinking preparation containing fruit juice and egg is described the method comprising treating the precipitated egg protein so that it takes the form of finely divided particles evenly dispersed throughout the liquid medium. The resulting drinking preparation is also claimed.

## Improvements in or Relating to Drinking Preparations

This invention relates to drinking preparations and more particularly to a drinking preparation having both egg and fruit juice as constituents.

In one aspect, the invention consists in a drinking preparation including a mixture of fruit juice and egg wherein the mixture is treated so that the precipitate which results from combining the juice and egg remains in the form of finely divided particles evenly dispersed throughout the liquid medium.

In a further aspect the invention consists in a method of preparing a drinking preparation said method comprising the steps of mixing a fruit juice with egg, and treating the mixture so that the precipitate resulting from combining the juice and egg remains in the form of finely divided particles evenly dispersed throughout the liquid medium.

Both egg and fruit juice are considered to have qualities desirable in health foods, the egg being a source of protein, Vitamin A and Lecithin and the fruit juice being a source of vitamin C and bioflavanoids. In the past drinks containing both egg and fruit juice have been sold commercially but, owing to precipitation of the egg protein upon contact with fruit juice, such drinks have been prepared at point-of-sale for immediate consumption, the juice and egg being mixed together using a blender in the same way that the well-known milkshake is prepared.

The present invention seeks to provide a drink including egg and fruit juice which not only has a commercially acceptable "shelf-life" but also retains a homogeneous texture throughout that shelf life.

The invention will now be further described in the following description and examples.

The invention will now be further described it being appreciated that many changes in construction and widely differing embodiments and applications of the invention will suggest themselves without departing from the scope of the invention as defined in the appended claims. The disclosures and the descriptions herein are purely illustrative and are not intended to be in any sense limiting.

The preferred method of performing the invention will now be described.

The present invention provides a method of forming a drinking preparation and a drinking preparation formed thereby in which the primary constituents of the preparation are natural fruit juice and whole egg.

Under conditions of low pH such as are typically found in fruit juices the protein in whole egg precipitates out into an unsightly precipitate or sediment. A similar effect occurs when albumen, the protein of egg white, is heated. Thus, it has hitherto not been possible to provide a drinking preparation having any degree of 'shelf-life' and which combines the benefits of fruit juice and egg merely by mixing these two basic ingredients..

The present invention provides a method of forming a drinking preparation combining whole egg and fruit juice by treating a formulation so that the subsequent precipitate takes the form of finely divided particles evenly dispersed as a 'cloud' throughout the liquid medium.

The theoretical basis upon which this stability depends is derived from an application of Stokes law which determines the velocity, $v$, of a sphere through a viscous liquid:

$$v = \frac{2}{5} \frac{r^2 g (\rho_1 - \rho_2)}{\eta}$$

where $r$ = radius of the sphere

$g$ = acceleration due to gravity

$\rho_1$ = density of sphere

$\rho_2$ = density of the surrounding fluid

$\eta$ = viscosity of fluid

In order to provide a mixture of liquid and precipitate in which the precipitate remains finely dispersed within the liquid medium, $v$ should be as close as possible to zero. In considering Stokes law it will be appreciated that this can be achieved by:

1. Reducing $r$ (making the precipitated particle size as small as possible),

2. Making the density of the precipitated particles as close as possible to the density of the surrounding liquid ($\rho_1$ approximates $\rho_2$),

3. Increasing the viscosity of the surrounding liquid.

Clearly, there may be practical limitations in merely concentrating on one of the above factors and, in practice, more than one may be taken into consideration in arriving at an acceptable product.

We have established a formulation which results in a small value of r and in which $\rho_2$ approximates $\rho_1$. Further, the phospholipid, lecithin, which occurs naturally in egg also serves to stabilise the suspended particles when the preferred formulation is followed, the lecithin coating each individual small diameter proteinaceous particle to provide a charged entity, the multitude of charged entities all repelling one another. The resulting preparation has displayed stable emulsion properties for a considerable period of time and indeed, the shelf-life of the product is generally dependent on the medium in which the product is packaged rather than the instability of the emulsion.

In the preferred method of performing the invention a fruit drink is first formed from natural fruit juice. It may typically contain 35% of fruit juice.

The whole egg can be obtained directly from fresh eggs but for practical purposes the egg is preferably obtained in the form of frozen pasteurised whole egg which is thawed prior to mixing.

In order to achieve a low value of r the mixture is homogenized. Such homogenisation could be effected by passing the mixture through a pressure valve homogeniser however it is believed that the solid particles may block the fine pathways of a pressure-valve homogeniser and cause wear and tear on the valves. Accordingly, homogenisation is preferably effected using an overhead emulsifier of the rotating blade, fixed shear screen type. Such a form of apparatus is manufactured by the SILVERSON company in the United Kingdom. We have found that best results are achieved using a machine of this manufacture fitted with a square hole high shear screen.

A further benefit of using an emulsifier of the overhead type referred to above is that mixing and homogenisation occurs simultaneously whereas, if a pressure-valve homogenizing process is selected, careful mixing must be effected as a separate operation prior to homogenisation.

In addition to the mixture of fruit drink and egg other food additives, preferably natural in form, can be added to adjust the final properties of the preparation. For example esters and oils may be added to enhance the fruit drink character while vitamins can be added to enhance the nutritional properties.

The resulting preparation may be packaged in any suitable, sealed medium such as cans or in an aseptic package (for example, aseptic TETRA-BRIK).

## EXAMPLE 1

A combined fruit juice/egg drinking preparation was prepared using a mixture of orange juice and whole egg.

An orange drink was first prepared from frozen orange juice.

As a first step the soluble solids content of the concentrated orange juice was determined using a hand refractometer and the concentrate reconstituted to a single strength juice of 12°B (applying Pearson's square technique). The orange drink was then prepared by diluting the juice so that the drink contained 35% fruit juice, 12.0°B and with a titratable acidity of 0.7% W/W calculated as anhydrous citric acid. This drink comprised 90% of the final product.

Based on the final product, 0.05g of ascorbic acid and 600 micro-grams of $\beta$-Carotene were added per 100 mls of product and mixing was effected using a SILVERSON electric powered overhead emulsifier. 45 mls of a proprietary brand of orange esters and 180 mls of an orange oil emulsion were added separately for each 100 litres of product.

Finally, 10% (of final product) of whole egg in the form of thawed pasteurized egg was added.

The mixture was homogenised at room temperature for 15 minutes using a SILVERSON emulsifier fitted with a square-hole high shear screen.

After homogenisation the product was heated to 82°C for two minutes in a plate heat exchanger, cooled and then aseptically packaged.

## EXAMPLE 2

A further drinking preparation was prepared using a combination of blackcurrant juice and egg.

As a first step a blackcurrant drink was prepared from frozen blackcurrant juice, the drink comprising:

18.63% blackcurrant juice (by weight)

8.73% sucrose (by weight)

62.64% water (by weight)

The ascorbic acid level of the final product was adjusted to 50gm per 100 kg and egg comprised 10% of the final product.

The above formulation was mixed and simultaneously homogenised at room temperature for 15 minutes using a SILVERSON overhead emulsifier fitted with a square-hole high sheer screen. During mixing 0.15% (of final product) of a proprietary brand of blackcurrant flavour (W.O.N.F.) was added.

After homogenisation the mixture was heated to 82°C for two minutes in a plate heat exchanger, cooled and then aseptically packaged.

We have found that products produced according to the methods above described have the following properties:

1. They are homogeneous products with stable suspensions of denatured protein.

2. They have a highly satisfactory 'velvet' texture, consistent pleasing taste and appearance.

3. They have a commercially acceptable shelf life.

4. The products are hygenically manufactured, free from pathogenic and spoilage micro-organisams and combine the benefits of fruit juice and egg in a readily assimilable form.

It will thus be appreciated that the present invention provides a method of forming a combined egg/fruit juice drinking preparation and a drinking preparation so formed which enables a product of long shelf life to be provided combining the natural attributes of the two primary constituents.

## Claims

1. A drinking preparation including a mixture of fruit juice and egg wherein the mixture is treated so that the precipitate which results from combining the juice and egg remains in the form of finely divided particles evenly dispersed throughout the liquid medium.

2. A preparation as claimed in Claim 1 wherein whole egg comprises 10% of the final weight of the product.

3. A preparation as claimed in Claim 1 or Claim 2 wherein the mixture of fruit juice and egg is homogenized to reduce the particle size of the precipitate.

4. A drinking preparation substantially as herein described with reference to the examples.

5. A method of forming a drinking preparation, said method comprising the steps of mixing a fruit preparation with egg, and treating the mixture so that the precipitate resulting from combining the preparation and egg remains in the form of finely divided particles evenly dispersed throughout the liquid medium.

6. A method as claimed in Claim 5 wherein the mixture including the precipitate is subjected to homogenisation.

7. A method as claimed in Claim 6 wherein homogenisation is effected using an overhead emulsifier in the form of a rotating blade acting in co-operation with an apertured shear screen.

8. A method as claimed in any one of Claims 6 to 8 further including the steps of adding naturally occurring esters and/or oils compatible with the fruit juice.

9. A method of forming a drinking preparation substantially as hereinbefore described with reference to the examples.

| | European Patent Office | EUROPEAN SEARCH REPORT | Application number |
|---|---|---|---|

EP 85 30 5522

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 919 195 (R.J. BLOCK) <br> * Claim 1; column 1, lines 44-47, 56-62; column 1, line 69 - column 2, line 7; examples 1,8 * | 1-5,9 | A 23 L    2/26 <br> A 23 L    2/38 |
| | --- | | |
| A | US-A-3 736 150 (J.A. BASSO et al.) <br> * Claims 1,4,7; column 4, lines 15-25 * | 1-9 | |
| | --- | | |
| A | EP-A-0 029 370 (STAUFFER CHEMICAL) <br> * Claims 1,21 * | 1-9 | |
| | ----- | | |

TECHNICAL FIELDS SEARCHED (Int. Cl.4)

A 23 L

The present search report has been drawn up for all claims

| Place of search | Date of completion of the search | Examiner |
|---|---|---|
| THE HAGUE | 01-04-1986 | VAN MOER A.M.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82